# EUROPÄISCHE PATENTANMELDUNG

(11) **EP 0 698 942 A1**
(43) Veröffentlichungstag der Anmeldung: **28.02.1996**
(21) Anmeldenummer: 95113245.5
(22) Anmeldetag: 23.08.1995
(51) Int. Cl.: H01R 4/36, H02G 15/10

(54) **Schraubverbinder für Kabel, insbesondere für Mittelspannungs-Verbindungsmuffen**

(30) Priorität: 26.08.1994 DE 4430406
(71) Anmelder: ARCUS ELEKROTECHNIK Alois Schiffmann GmbH, D-81673 München (DE)
(72) Erfinder: Czernek, Georg, D-86415 Mering (DE)
(74) Vertreter: Sajda, Wolf E., Dipl.-Phys.

(57) **Zusammenfassung**

Es wird ein Schraubverbinder für Kabel, insbesondere für Mittelspannungs-Verbindungsmuffen angegeben, der einen hohlen Verbinderkörper (10) zur Aufnahme von zu verbindenden Kabelenden und Klemmschrauben aufweist, die in den Verbinderkörper quer zu dessen Längserstreckung einschraubbar sind. Der Verbinderkörper (10) hat für jedes Kabelende einen rotationssymmetrisch ausgebildeten Hohlraum (20), der sich von dem jeweiligen axialen Ende des Verbinderkörpers (10) aus in den Verbinderkörper (10) hineinerstreckt und zumindest in dessen Innenbereich konisch verjüngt ausgebildet ist. Ferner ist für jedes Kabelende ein Paar von Klemmschrauben (40) vorgesehen, die von gegenüberliegenden Längsseiten (11) des Verbinderkörpers (10) senkrecht zur Längsachse des Hohlraumes (20) einander diametral gegenüberliegend einschraubbar sind.

## Beschreibung

Die Erfindung betrifft einen Schraubverbinder für Kabel, insbesondere für Mittelspannungs-Verbindungsmuffen, mit einem hohlen, im wesentlichen zylinderförmigen Verbinderkörper zur Aufnahme von zu verbindenden Kabelenden und mit Klemmschrauben, die in den Verbinderkörper quer zu dessen Längserstreckung einschraubbar sind.

Schraubverbinder dieser Art sind in verschiedenen Bauformen bekannt, um Kabel an ihren Enden miteinander zu verbinden oder um Abzweigungen von Kabeln zu realisieren. Der Innendurchmesser des hohlen Verbinderkörpers begrenzt dabei den maximal verklemmbaren Kabeldurchmesser. Wenn Kabel mit kleineren Querschnitten zu verklemmen sind, wird die Klemmschraube entsprechend weit in den Innenraum des Verbinderkörpers hineingeschraubt, wobei das jeweilige Kabelende an der der Klemmschraube gegenüberliegenden Seite gegen die Innenwand des Verbinderkörpers gepreßt wird.

Die Erfahrung hat gezeigt, daß solche Schraubverbinder für Kabel, die Mittelspannungen führen, etwa in der Größenordnung von 20 kV nur bedingt geeignet sind. Wenn nämlich der Innendurchmesser des Verbinderkörpers nicht exakt an den Kabelquerschnitt angepaßt ist, kommt es wegen der exzentrischen Anordnung des Kabelendes in dem Schraubverbinder zu elektrischen Feldverzerrungen und lokalen Feldkonzentrationen, die leicht zu schädlichen Spannungsdurchschlägen führen.

Dieser Situation läßt sich dadurch begegnen, daß man für die verschiedenen üblichen Leiterquerschnitte von Kabeln ein Sortiment von Schraubverbindern zur Verfügung stellt, um bei Verwendung der herkömmlichen Bauformen für geeignete Schraubverbindungen zu sorgen. Es erscheint einsichtig, daß dies einerseits die Lagerhaltung erschwert und andererseits die Gefahr mit sich bringt, daß in unerwünschter Weise Schraubverbinder mit zu großen Innenquerschnitten verwendet werden, bei denen dann gefährliche exzentrische Verklemmungen der Kabelenden vorgenommen werden.

Der Erfindung liegt daher die Aufgabe zugrunde, einen Schraubverbinder der eingangs genannten Art anzugeben, der einerseits eine exakte zentrische Positionierung des jeweiligen Kabelendes im Schraubverbinder gewährleistet und andererseits in vielseitiger Weise einsetzbar ist.

Die erfindungsgemäße Lösung besteht darin, einen Schraubverbinder der eingangs genannten Art so auszubilden, daß der Verbinderkörper für jedes Kabelende einen rotationssymmetrisch ausgebildeten Hohlraum aufweist, der sich von dem jeweiligen axialen Ende des Verbinderkörpers aus in den Verbinderkörper hinein erstreckt und zumindest in dessen Innenbereich konisch verjüngt ausgebildet ist, daß in das jeweilige axiale Ende des Verbinderkörpers ein kreiszylinderförmiger Reduzierring einsetzbar ist, dessen Innendurchmesser den Querschnitt eines einsetzbaren Kabelendes begrenzt und der das jeweilige Kabelende konzentrisch in dem Verbinderkörper haltert, und daß für jedes Kabelende ein Paar von Klemmschrauben vorgesehen ist, die von gegenüberliegenden Längsseiten des Verbinderkörpers senkrecht zur Längsachse des Hohlraumes einander diametral gegenüberliegend einschraubbar sind.

Mit dem erfindungsgemäßen Schraubverbinder wird die Aufgabe in zufriedenstellender Weise gelöst. Aufgrund der Tatsache, daß der Innenbereich des Hohlraumes im Verbinderkörper konisch verjüngt ausgebildet ist, wird eine koaxiale Anordnung des jeweiligen Kabelendes unabhängig von seinem Leiterquerschnitt in dem Verbinderkörper gewährleistet. Die von gegenüberliegenden Seiten einschraubbaren beiden Klemmschrauben halten das jeweilige Kabelende in der Achse des Verbinderkörpers und sorgen für den erforderlichen mechanischen und elektrischen Kontakt. Auch wird in vorteilhafter Weise erreicht, daß der jeweilige Leiter des Kabelendes an zwei beabstandeten Stellen zwischen den Klemmschrauben positioniert und fixiert ist, um dadurch zu der koaxialen Anordnung beizutragen. Auf diese Weise treten auch bei Mittelspannungen in der Größenordnung von 20 kV keine Probleme aufgrund von exzentrischen Positionierungen des Kabels im Schraubverbinder auf.

In Weiterbildung des erfindungsgemäßen Schraubverbinders ist vorgesehen, daß der Verbinderkörper als Hohlzylinder mit zwei spiegelsymmetrisch angeordneten koaxialen Hohlräumen ausgebildet ist, die gegebenenfalls im Inneren des Verbinderkörpers miteinander in Verbindung stehen. Auch diese Maßnahmen tragen zur koaxialen Anordnung der zu verbindenden Kabelenden bei. Die fakultativ vorgesehene Verbindung zwischen den beiden Hohlräumen trägt dem Umstand Rechnung, daß teilweise sogenannt Naßkabel mit Öltränkung verwendet werden.

In Weiterbildung des erfindugsgemäßen Schraubverbinders ist vorgesehen, daß der jeweilige Hohlraum von dem jeweiligen axialen Ende des Verbinderkörpers aus einen im wesentlichen zylinderförmigen Eintrittsbereich aufweist, der in einen konisch verjüngten Endbereich übergeht. Der zylinderförmige Eintrittsbereich hat dabei den Durchmesser für einen maximalen Leiterquerschnitt eines zu verklemmenden Kabels, während der konisch verjüngte Endbereich zur Aufnahme und Positionierung von Leitern mit kleinerem Querschnitt dient.
In Weiterbildung des erfindungsgemäßen Schraubverbinders ist vorgesehen, daß der Hohlraum im Innenbereich des Verbinderkörpers sich stufenförmig konisch in diesen hinein verjüngt. Damit wird die Positionierung der jeweiligen Leiter weiter verbessert.

In einer speziellen Bauform des erfindungsgemäßen Schraubverbinders ist vorgesehen, daß der Hohlraum im Innenbereich des Verbinderkörpers mehrere koaxial hintereinander angeordnete kreiszylinderförmige Bereiche mit stufenförmig abnehmenden Innendurchmessern aufweist, wobei diese kreiszylinderförmigen Bereiche mit sich konisch verjüngenden Schrägflächen verbunden sind. Auf diese Weise wird für eine erleichterte Einführung von Leitern mit kleineren Querschnitten gesorgt, um diese in der gewünschten Weise koaxial zu positionieren.

In Weiterbildung des erfindungsgemäßen Schraubverbinders wird vorgesehen, daß der Verbinderkörper in dem jeweiligen axialen Ende eine stufenförmig ausgebildete Aussparung zur Aufnahme eines Reduzierringes aufweist. Dadurch wird ein exakter Sitz des Reduzierringes in einer Paßbohrung zur koaxialen Halterung des Kabelendes gewährleistet.

Bei einer speziellen Ausführungsform des erfindungsgemäßen Schraubverbinders ist vorgesehen, daß der jeweilige Reduzierring einen Innenzylinder mit einem Innendurchmesser hat, der gleich dem Innendurchmesser von einem der kreiszylinderförmigen Bereiche des Hohlraumes im Verbinderkörper ist. Damit wird für eine exakte koaxiale Ausfluchtung des jeweiligen Leiters gesorgt.

In Weiterbildung des erfindungsgemäßen Schraubverbinders ist vorgesehen, daß der Reduzierring in den Verbinderkörper einpreßbar oder einschraubbar ist und die Kanten seines Innendurchmessers abgefast sind. Dadurch ist der Reduzierring selbst exakt in dem Verbinderkörper positioniert, und er erleichtert seinerseits das Einführen des jeweiligen Leiters in den Verbinderkörper.

In Weiterbildung des erfindungsgemäßen Schraubverbinders ist vorgesehen, daß der Verbinderkörper in seiner Außenoberfläche diametral gegenüberliegende Einsenkungen aufweist, die in Gewindebohrungen für die Klemmschrauben übergehen. Auf diese Weise besitzt der Verbinderkörper eine glatte Außenoberfläche, die kein Sprühen hervorruft und das beschädigungsfreie Aufschieben von Feldsteuerteilen vorgefertigter Verbindungsmuffen ermöglicht.

In Weiterbildung des erfindungsgemäßen Schraubverbinders ist vorgesehen, daß die Klemmschrauben in der Nähe der axialen Enden des Verbinderkörpers im Bereich des zylinderförmigen Eintrittsbereichs angeordnet sind. Der Leiter des Kabelendes kann auf diese Weise weit genug in den Verbinderkörper eingeschoben werden, um eine sichere Klemmung im Verbinderkörper zu gewährleisten. Diese Voraussetzung ist auch dann erfüllt, wenn ein Leiter mit maximalem Querschnitt verklemmt wird.

Besonders vorteilhaft ist es, wenn die Klemmschrauben als Abscherschrauben mit sphärischen Kontaktflächen ausgebildet sind. Solche sphärischen Kontaktflächen sorgen für einen guten elektrischen Klemmkontakt, ohne daß die Oberfläche des jeweiligen Leiters in nachteiliger Weise beschädigt wird. Da der Abreißkopf bei solchen Abscherschrauben nach dem vorgegebenen Festziehen der Klemmschrauben abreißt, hat der Schraubverbinder insgesamt eine akzeptable Außenkontur, die einerseits wenig Einbauraum erfordert und andererseits die beschädigungsfreie Verwendung von Aufschiebeteilen von Verbindungsmuffen ermöglicht.

Bei einer speziellen Bauform des erfindungsgemäßen Schraubverbinders ist vorgesehen, daß die Klemmschrauben als Abscherschrauben ausgebildet sind, die zwischen einem Abreißkopf und einem Gewindekörper eine Sollbruchstelle in einem Übergangsbereich haben, der in einer in Umfangsrichtung verlaufenden, in axialer Richtung der Abscherschraube offenen und vertieften Abscherrille endet, so daß die gesamte Bruchstelle in axialer Richtung der Abscherschraube weiter vom Abreißkopf entfernt liegt als das dem Abreißkopf zugewandte Ende des Gewindekörpers. Damit wird in vorteilhafter Weise erreicht, daß die Sollbruchstelle der Abscherschraube gegenüber der Außenoberfläche des Schraubverbinders tief genug liegt und keinen unerwünschten Grat bildet.

In Weiterbildung des erfindungsgemäßen Schraubverbinders ist vorgesehen, daß die Klemmschrauben an ihrem Abreißkopf Markierungen tragen, die das Abdrehmoment der Abscherschrauben angeben. Auf diese Weise kann sichergestellt werden, daß geeignete Klemmschrauben für die jeweiligen Leiterquerschnitte der Kabel verarbeitet werden.

Weiterhin ist es zweckmäßig, wenn der Verbinderkörper des erfindungsgemäßen Schraubverbinders an seinen, die jeweiligen Kabelenden aufnehmenden axialen Enden auf der Außenseite Schrägflächen aufweist, die sich in seiner axialen Richtung konisch nach außen verjüngen.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Die Zeichnungen zeigen in
- Fig. 1: einen schematischen Längsschnitt durch einen Schraubverbinder gemäß der Erfindung;
- Fig. 2: eine stirnseitige Endansicht des Schraubverbinders gemäß Fig. 1 von rechts;
- Fig. 3: eine schematische Seitenansicht des erfindungsgemäßen Schraubverbinders;
- Fig. 4: einen Längsschnitt durch den Verbinderkörper für den erfindungsgemäßen Schraubverbinder;
- Fig. 5: eine Vorderansicht des Verbinderkörpers gemäß Fig. 4 von links bzw. rechts;
- Fig. 6: einen Längsschnitt eines Reduzierrings für den Schraubverbinder gemäß der Erfindung; und in
- Fig. 7: eine Draufsicht auf den Reduzierring gemäß Fig. 6 von links bzw. rechts.

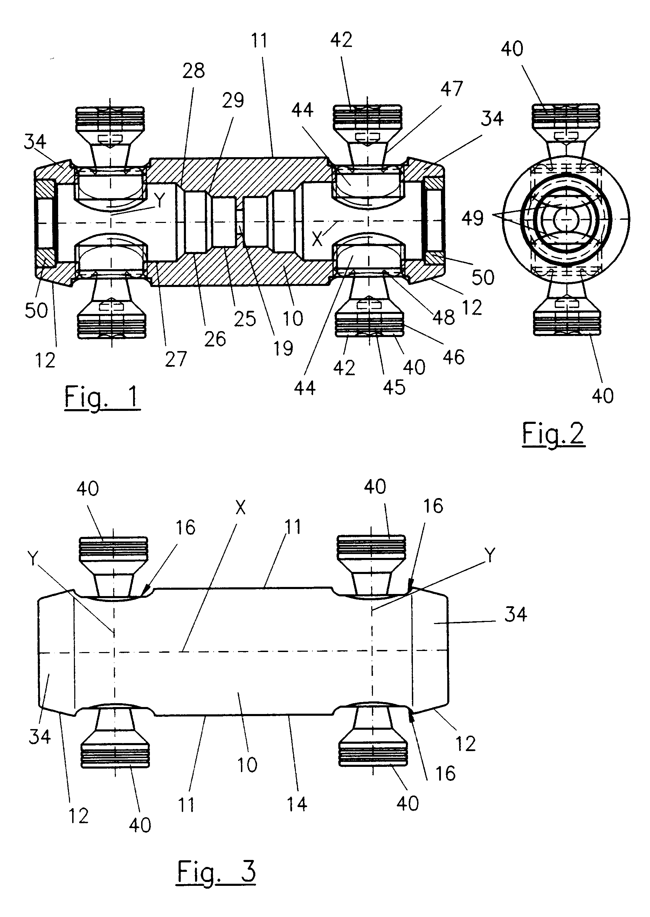

Der Gesamtaufbau des Schraubverbinders ist in Fig. 3 schematisch dargestellt. Man erkennt einen Verbinderkörper 10, der eine im wesentlichen zylinderförmige Konfiguration koaxial zu seiner Längsachse X aufweist und an seinen axialen Enden 34 auf der Außenseite Schrägflächen 12 besitzt, die sich in seiner axialen Richtung konisch nach außen verjüngen. Senkrecht zu dieser Längsachse X sind in Richtung von orthogonalen Querachsen Y zwei Paar von Klemmschrauben 40 vorgesehen, die einander diametral gegenüberliegen. Diese Klemmschrauben 40 sind im Bereich von Einsenkungen 16 in der Nähe der axialen Enden 34 des Verbinderkörpers 10 vorgesehen.

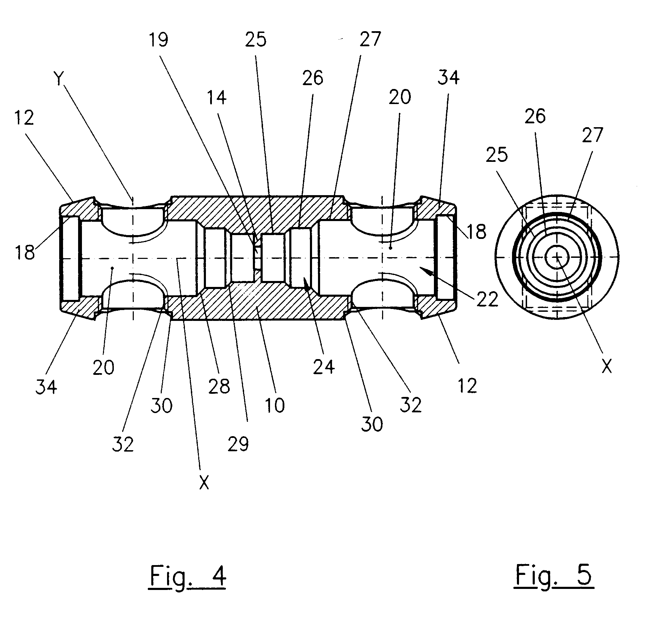

Der Aufbau eines derartigen Verbinderkörpers 10 ist im einzelnen in den Fig. 4 und 5 dargestellt. Man erkennt, daß der Verbinderkörper 10 von seinem axialem Ende 34 aus nach innen einen zylinderförmigen Eintrittsbereich 22 sowie einen konisch verjüngten Endbereich 24 aufweist, die zusammen einen Hohlraum 20 zur Aufnahme eines Leiters bzw. eines Kabelendes bilden, das in dem Schraubverbinder zu verklemmen ist. Dieser Hohlraum 20 ist rotationssymmetrisch bezogen auf die Längsachse X ausgebildet In Fig. 4 sind zwei derartige, axial gegenüberliegende Hohlräume 20 vorgesehen, die über einen Durchgang 19 in einer Wand 14 miteinander in Verbindung stehen können. Alternativ kann diese Wand 14 auch durchgehend ausgebildet sein und die beiden Hohlräume 20 voneinander trennen.

Der Eintrittsbereich 22 wird von einem zylinderförmigen Bereich 27 gebildet, der an der Außenseite in eine nachstehend näher erläuterte Aussparung 18 übergeht. Auf der Innenseite des Eintrittsbereiches 22 geht der kreiszylinderförmige Bereich 27 mit maximalen Durchmesser über eine erste Schrägfläche 28 in einen kreiszylinderförmigen Bereich 26 mit kleinerem Durchmesser über. In axialer Richtung nach innen geht dieser kreiszylinderförmige Bereich 26 dann über eine zweite Schrägfläche 29 in einen dritten kreiszylinderförmigen Bereich 25 über, der einen noch kleineren Innendurchmesser besitzt.
Bei dem dargestellten Ausführungsbeispiel sind somit drei kreiszylinderförmige Bereiche 25, 26 und 27 in abgestufter Form vorhanden, die dazu dienen, Leiter mit unterschiedlichen Querschnitten exakt koaxial in dem Verbinderkörper 10 zu positionieren. Die Schrägflächen 28 und 29 erleichtern das Einführen des jeweiligen Leiters in den Innenraum des Verbinderkörpers 10, wobei diese Schrägflächen 28 und 29 beispielsweise einen Kegelwinkel von 90° einschließen, also mit dem jeweils nächst größeren kreiszylinderförmigen Bereich einen Winkel von 135° bilden. Selbstverständlich können diese Schrägflächen auch unter anderen Winkeln vorgesehen sein und entsprechende glatte Übergänge zwischen den kreiszylinderförmigen Bereichen bilden.

Wenn vorstehend von drei solchen, stufenförmig ausgebildeten, kreiszylinderförmigen Bereichen die Rede ist, so ist der erfindungsgemäße Schraubverbinder nicht darauf beschränkt. Wahlweise können auch mehr oder weniger solche stufenförmig abgesetzten Bereiche mit Übergangsflächen vorgesehen sein.

Bei einer anderen, nicht dargestellten Ausführungsform ist es auch möglich, von dem zylinderförmigen Eintrittsbereich 22 eine durchgehende Konusfläche axial ins Innere des Verbinderkörpers 10 hineinlaufen zu lassen, um auf dies Weise eine variable Anpassung an den Querschnitt des jeweiligen Leiters vorzusehen, ohne daß eine Einschränkung auf spezielle Querschnitte des jeweiligen Leiters erfolgt.

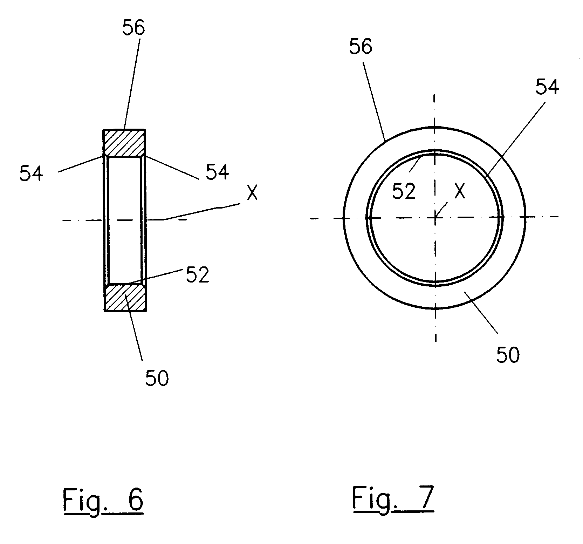

An den axialen Enden 34 des Verbinderkörpers 10 erkennt man stufenförmig ausgebildete, zylinderförmige Aussparungen 18, die Paßbohrungen bilden und zur Aufnahme von Reduzierringen 50 dienen, die im einzelnen in den Figuren 6 und 7 dargestellt sind. Diese Reduzierringe 50 werden in die Aussparung 18 eingeschoben, eingepreßt oder mit einem nicht dargestellten Außengewinde in ein entsprechendes, nicht dargestelltes Innengewinde in der Aussparung 18 hineingeschraubt und bilden auf diese Weise einen axialen Abschluß des Verbinderkörpers 10.

Wie aus Fig. 6 und 7 ersichtlich, handelt es sich bei dem Reduzierring 50 um einen kreiszylinderförmigen Ring, dessen Außenzylinder 56 mit seinem Außendurchmesser dem Innendurchmesser der Aussparung 18 entspricht. Der Reduzierring 50 hat einen Innenzylinder 52, der mit Fasen 54 versehen ist, derart, daß dieser Innenzylinder 52 den Eintrittsquerschnitt für einen Leiter bzw. ein Kabelende begrenzt. Die Mittelachse dieses Innenzylinders 52 ist exakt mit der Längsachse X des Verbinderkörpers 10 ausgefluchtet, so daß der Reduzierring 50 eine radiale Abstützung für den jeweils anzuschließenden Leiter bildet. Der Reduzierring 50 wird dabei mit geeignetem Innenzylinder gewählt, wie man aus Fig. 1 entnehmen kann. In der rechten Hälfte von Fig. 1 ist ein Reduzierring 50 vorgesehen, dessen Innendurchmesser dem zweiten kreiszylinderförmigen Bereich 26 des Hohlraumes 20 entspricht, während der linke Reduzierring 50 in Fig. 1 einen Innendurchmesser hat, der gleich dem Innendurchmesser des dritten kreiszylinderförmigen Bereiches 25 ist.

In der dargestellten Weise schließen die Reduzierringe 50 zweckmäßigerweise in axialer Richtung bündig mit der Außenkante des Verbinderkörpers 10 ab. Die Reduzierringe 50 können jedoch in axialer Richtung auch einen Innenzylinder 52 mit einer axialen Ausdehnung haben, die größer ist als die axiale Erstreckung der Aussparung 18, um eine möglichst großflächige und langgestreckte Abstützung des jwweiligen Kabelendes zu gewährleisten.

Auf diese Weise ist es möglich, einen entsprechenden Leiter an zwei axial beabstandeten Stellen in Längsrichtung der Achse X des Verbinderkörpers 10 exakt in radialer Richtung abzustützen und damit exakt koaxial zu positionieren.

Zur Befestigung eines derartigen Kabelendes oder Leiters dienen Klemmschrauben 40, die in den Fig. 1 bis 3 angedeutet sind. Zu diesem Zweck ist der Verbinderkörper 10 an jeweils zwei gegenüberliegenden Längsseiten mit Vertiefungen 16 ausgebildet, die zylinderförmige oder sich konisch verjüngende Aussparungen 30 aufweisen, welche ihrerseits in Gewindebohrungen 32 übergehen, welche in den Innenraum des Eintrittsbereiches 22 des Hohlraumes 20 führen. Diese Gewindebohrungen 32 verlaufen senkrecht zu der Längsachse X in Richtung von radialen Querachsen Y, wobei die Gewindebohrungen 32 einander paarweise diametral gegenüberliegen.

Die Klemmschrauben 40 sind zweckmäßigerweise als Abscherschrauben ausgebildet, die mit sphärischen Kontaktflächen 49 (vgl. Fig. 2) ausgebildet sind, die mit dem jeweiligen zu kontaktierenden Leiter in Klemmeingriff kommen, ohne diesen in unerwünschter Weise zu beschädigen. Wie in Fig. 1 schematisch dargestellt, haben die Abscherschrauben 40 einen Abreißkopf 42 mit einer schematisch angedeuteten Angriffsfläche 45, beispielsweise einem Innensechskant. An dem Abreißkopf 42 sind Markierungen 46 angedeutet, die dazu dienen können, das Abdrehmoment der Abscherschraube anzugeben. Der Abreißkopf 42 führt über einen Übergangsbereich 47 zu einem Gewindekörper 44, der in die Gewindebohrung 32 im Verbinderkörper 10 eingesetzt ist. Der Übergangsbereich 47 hat dabei eine in geeigneter Weise vorgesehene sollbruchstelle.

Zweckmäßigerweise endet nämlich der Übergangsbereich 47 in einer in Umfangsrichtung verlaufenden, in axialer Richtung der Abscherschraube 40 offenen und vertieften Abscherrille 48, so daß die an der Stelle der Abscherrille 48 gebildete Sollbruchstelle beim Abreißen des Abreißkopfes 42 in axialer Richtung weiter von dem Abreißkopf 42 entfernt liegt, als das dem Abreißkopf 42 zugewandte Ende des Gewindekörpers 44. Mit anderen Worten, diese Sollbruchstelle im Bereich der Abscherrille 48 liegt, von der Außenoberfläche des Verbinderkörpers 10 aus gesehen, weiter innen als die Außenoberfläche 11, so daß im Idealfall diese Sollbruchstelle nicht über den Außenumfang des Verbinderkörpers 10 vorsteht. Diese Maßnahme wird auch dadurch unterstützt, daß die Gewindebohrung 32 ihrerseits in der Vertiefung 30 liegt, mit der Folge, daß auch der außenliegende Gewindebereich der Klemmschraube 40 nach Möglichkeit nicht über den Außenumfang des Verbinderkörpers 10 vorsteht.

Diese Maßnahmen tragen dazu bei, daß nach dem Verklemmen der jeweiligen Leiter in dem Schraubverbinder von den Klemmschrauben möglichst keine Teile nach außen vorstehen, wenn die Abreißköpfe abgeschert worden sind. Auf diese Weise können dann Muffen ohne weiteres über den Verbinderkörper 10 geschoben werden, ohne daß die Gefahr ihrer Beschädigung besteht.

Dieses Aufschieben von Muffen wird durch die Schrägflächen 12 an den axial äußeren Enden 34 erleichtert. Zugleich können diese sich konisch verjüngenden Schrägflächen 12 dazu verwendet werden, ein feldsteuerndes oder ein feldglättendes Band, beispielsweise ein Halbleiterband, über den Übergangsbereich zwischen einem eingeklemmten Leiter und dem Verbinderkörper zu wickeln. Wenn diese vorbereitenden Maßnahmen getroffen sind, kann anschließend eine Muffe übergeschoben werden.

Die Montage von Kabelenden bzw. Leitern in einem derartigen Schraubverbinder geschieht folgendermaßen. In Abhängigkeit von dem zu verklemmenden Leiterquerschnitt wird ein geeigneter Reduzierring mit entsprechendem Innendurchmesser entweder direkt in die Aussparung 18 eingepreßt oder eingeschraubt oder aber auf das Kabelende aufgeschoben und mit diesem zusammen in die Aussparung 18 am axialen Ende 34 eingesetzt. Hat der Leiter den maximal möglichen Querschnitt, so kann das Einsetzen des Reduzierringes entfallen, weil dann keine Anpassung an den größten kreiszylinderförmigen Bereich 27 des Hohlraumes 20 erforderlich ist.

Wenn der Verbinderkörper 10, gegebenenfalls mit dem Reduzierring 50 entsprechend vorbereitet ist, wird der jeweilige Leiter axial in den Hohlraum 20 so weit wie möglich eingeführt, damit er sich in Umfangsrichtung an den jeweiligen Wänden abstützt. Falls erforderlich, sorgt zugleich der Innenzylinder 52 des Reduzierringes 50 auf der axial äußeren Seite für eine entsprechende Positionierung und Abstützung. Dann wird das Paar von Klemmschrauben 40 von Hand eingeschraubt, bis sich beide Klemmschrauben 40 mit ihren Kontaktflächen 49 an dem Leiter abstützen, der eine koaxiale Position einnimmt. Danach werden diese Klemmschrauben 40 wechselweise bis zu dem gewünschten Drehmoment angezogen, um eine zuverlässige mechanische und elektrische Verbindung herzustellen. Wenn der jeweilige Abreißkopf 42 abreißt, ist die vorgegebene und gewünschte Anpreßkraft erreicht. Anschließend kann dann die Muffe aufgebracht und fixiert werden.

In der vorstehenden Beschreibung ist im Zusammenhang mit den verschiedenen Figuren der Zeichnungen ein Schraubverbinder für Kabel erläutert, der als Kabelverbinder von zwei entsprechenden Kabeln bzw. Leitern vorgesehen ist. Die Erfindung ist jedoch in gleicher Weise anwendbar auf Schraubverbinder, die nur auf der einen Seite ein Kabelende aufnehmen und auf der anderen Seite als Kabelschuh ausgebildet sind, der in geeigneter Weise an einer Stromschiene befestigt werden kann.

## Patentansprüche

1. Schraubverbinder für Kabel, insbesondere für Mittelspannungs-Verbindungsmuffen, mit einem hohlen, im wesentlichen zylinderförmigen Verbinderkörper (10) zur Aufnahme von zu verbindenden Kabelenden und mit Klemmschrauben (40), die in den Verbinderkörper (10) quer zu dessen Längserstrekkung einschraubbar sind,
**dadurch gekennzeichnet**,
daß der Verbinderkörper (10) für jedes Kabelende einen rotationssymmetrisch ausgebildeten Hohlraum (20) aufweist, der sich von dem jeweiligen axialen Ende des Verbinderkörpers (10) aus in den Verbinderkörper (10) hineinerstreckt und zumindest in dessen Innenbereich konisch verjüngt ausgebildet ist,
daß in das jeweilige axiale Ende (34) des Verbinderkörpers (10) ein kreiszylinderförmiger Reduzierring (50) einsetzbar ist, dessen Innendurchmesser den Querschnitt eines einsetzbaren Kabelendes begrenzt und der das jeweilige Kabelende koaxial in dem Verbinderkörper (10) haltert, und daß für jedes Kabelende ein Paar von Klemmschrauben (40) vorgesehen ist, die von gegenüberliegenden Längsseiten (11) des Verbinderkörpers (10) senkrecht zur Längsachse (X) des Hohlraumes (20) einander diametral gegenüberliegend einschraubbar sind.

2. Schraubverbinder nach Anspruch 1,
**dadurch gekennzeichnet**,
daß der Verbinderkörper (10) als Hohlzylinder mit spiegelsymmetrisch angeordneten, koaxialen Hohlräumen (20) ausgebildet ist, die gegebenenfalls im Inneren des Verbinderkörpers (10) miteinander in Verbindung (19) stehen.

3. Schraubverbinder nach Anspruch 1 oder 2,
**dadurch gekennzeichnet**,
daß der jeweilige Hohlraum (20) von dem jeweiligen axialen Ende (34) des Verbinderkörpers (10) aus einen im wesentlichen zylinderförmigen Eintrittsbereich (22) aufweist, der in einen konisch verjüngten Endbereich (24) übergeht.

4. Schraubverbinder nach einem der Ansprüche 1 bis 3,
**dadurch gekennzeichnet**,
daß der Hohlraum (20) im Innenbereich des Verbinderkörpers (10) sich stufenförmig konisch in diesen hinein verjüngt.

5. Schraubverbinder nach einem der Ansprüche 1 bis 4,
**dadurch gekennzeichnet**,
daß der Hohlraum (20) im Innenbereich des Verbinderkörper (10) mehrere koaxial hintereinander angeordnete kreiszylinderförmige Bereiche (25, 26, 27) mit stufenförmig abnehmenden Innendurchmessern aufweist, wobei diese kreiszylinderförmigen Bereiche (25, 26, 27) mit sich konisch verjüngenden Schrägflächen (28, 29) verbunden sind.

6. Schraubverbinder nach einem der Ansprüche 1 bis 5,
**dadurch gekennzeichnet**,
daß der Verbinderkörper (10) in dem jeweiligen axialen Ende (34) eine stufenförmig ausgebildete Aussparung (18) zur Aufnahme eines Reduzierringes (50) aufweist.

7. Schraubverbinder nach einem der Ansprüche 1 bis 6,
**dadurch gekennzeichnet**,
daß der jeweilige Reduzierring (50) einen Innenzylinder (52) mit einem Innendurchmesser hat, der gleich dem Innendurchmesser von einem der kreiszylinderförmigen Bereiche (25, 26, 27) des Hohlraumes (20) im Verbinderkörper (10) ist.

8. Schraubverbinder nach einem der Ansprüche 1 bis 7,
**dadurch gekennzeichnet**,
daß der Reduzierring (50) in den Verbinderkörper (10) einpreßbar oder einschraubbar ist,
und daß die Kanten seines Innenzylinders (52) abgefast (54) sind.

9. Schraubverbinder nach einem der Ansprüche 1 bis 8,
**dadurch gekennzeichnet**,
daß der Verbinderkörper (10) in seiner Außenoberfläche diametral gegenüberliegende Einsenkungen (16; 30) aufweist, die in Gewindebohrungen (32) für die Klemmschrauben (40) übergehen.

10. Schraubverbinder nach einem der Ansprüche 1 bis 9,
**dadurch gekennzeichnet**,
daß die Klemmschrauben (40) in der Nähe der axialen Enden (34) des Verbinderkörper (10) im Bereich des zylinderförmigen Eintrittsbereiches (22) angeordnet sind.

11. Schraubverbinder nach einem der Ansprüche 1 bis 10,
**dadurch gekennzeichnet**,
daß die Klemmschrauben (40) als Abscherschrauben mit sphärischen Kontaktflächen (49) ausgebildet sind.

12. Schraubverbinder nach einem der Ansprüche 1 bis 11,
**dadurch gekennzeichnet**,
daß die Klemmschrauben (40) als Abscherschrauben ausgebildet sind, die zwischen einem Abreißkopf (42) und einem Gewindekörper (44) eine sollbruchstelle in einem Übergangsbereich (47) haben, der in einer in Umfangsrichtung verlaufenden, in axialer Richtung der Abscherschraube offenen und vertieften Abscherrille (48) endet, so daß die gesamte Bruchstelle in dieser axialen Richtung weiter vom Abreißkopf (42) entfernt liegt als das dem Abreißkopf (42) zugewandte Ende des Gewindekörpers (44).

13. Schraubverbinder nach Anspruch 11 oder 12,
**dadurch gekennzeichnet**,
daß die Klemmschrauben (40) an ihrem Abreißkopf Markierungen (46) tragen, die das Abdrehmoment der Abscherschrauben angeben.

14. Schraubverbinder nach einem der Ansprüche 1 bis 13,
**dadurch gekennzeichnet**,
daß der Verbinderkörper (10) an seinen, die jeweiligen Kabelenden aufnehmenden axialen Enden (34) auf der Außenseite Schrägflächen (12) aufweist, die sich in axialer Richtung konisch nach außen verjüngen.
